Europäisches Patentamt

European Patent Office

Office européen des brevets

(19)

(11) Veröffentlichungsnummer: **0 341 431**
**A2**

## (12) EUROPÄISCHE PATENTANMELDUNG

(21) Anmeldenummer: 89106244.0

(22) Anmeldetag: 08.04.89

(51) Int. Cl.⁴: **A23G 1/02**

(30) Priorität: 22.04.88 DE 3813615

(43) Veröffentlichungstag der Anmeldung:
15.11.89 Patentblatt 89/46

(84) Benannte Vertragsstaaten:
CH DE ES IT LI NL

(71) Anmelder: **Gebrüder Bauermeister & Co**
**Verfahrenstechnik GmbH & Co.**
**Oststrasse 40**
**D-2000 Norderstedt/ Hamburg(DE)**

(72) Erfinder: **Deublein, Dieter, Dr.-Ing.**
**Weidenstieg 10**
**D-2070 Ahrensburg(DE)**

(74) Vertreter: **von Raffay, Vincenz, Dipl.-Ing. et al**
**Patentanwälte Raffay & Fleck Postfach 32 32**
**17**
**D-2000 Hamburg 13(DE)**

(54) **Verfahren und Vorrichtung zum Aromatisieren, Alkalisieren, Raffinieren, Sterilisieren und Rösten von Kakaomasse.**

(57) Das Verfahren und die Vorrichtung zum Aromatisieren, Alkalisieren, Raffinieren, Sterilisieren und Rösten von Kakaomasse zur Herstellung von Kakaopulver und Schokoladenmasse wird in einem Mischbehälter durchgeführt, der vorzugsweise als liegender Zylinder ausgebildet ist und ein Rührwerk 3 enthält. Getrennt ausgebildet von diesem Mischbehälter 2 ist ein Wärmetauscher 8, durch den ein Teilstrom der Schokoladenmasse aus dem Mischbehälter gepumpt und erwärmt wird. Die erwärmte Schokoladenmasse gelangt zurück in den Mischbehälter, vorzugsweise über einen Schirm 10 mit einer gewölbten Oberfläche zur Erzeugung einer entsprechenden dünnen Schicht. Dadurch, daß Mischbehälter und Wärmetauscher voneinander getrennt sind, lassen sich beide Bauteile entsprechend optimal nach den ihnen zugedachten Aufgaben auslegen und konstruieren. Die Vorrichtung ist einfach aufgebaut und erzeugt hinsichtlich der erwünschten Qualität ein hervorragendes Endprodukt.

## Verfahren und Vorrichung zum Aromatisieren, Alkalisieren, Raffinieren, Sterilisieren und Rösten von Kakaomasse.

Die Erfindung betrifft ein Verfahren und eine Vorrichtung nach dem Oberbegriff des Patentanspruches 1.

Es sind die unterschiedlichsten Verfahren und Vorrichtungen bekannt, die mit einem Mischbehälter ausgerüstet sind, der die unterschiedlichsten Aufgaben übernimmt.

Kakaomasse wird aromatisiert, alkalisiert, raffiniert, sterilisiert und geröstet, um die Produkte, wie Kakaopulver und Schokoladenmasse qualitativ zu verbessern. Die Verfahren werden in den unterschiedlichsten, dem jeweiligen Arbeitsgang optimal angepaßten Anlagen durchgeführt.

Bei einer bekannten Anlage werden aus der Kakaomasse in dünner Schicht aromatische leicht flüchtige Stoffe verdampft. Bei einer anderen bekannten Anlage zum Alkalisieren wird, um die Farbe der Kakaomasse zu verändern, diese Kakaomasse mit einer Basis Lösung besprüht und anschließend auf eine gewünschte Reaktionstemperatur gebracht.

Aus der E-PS 0032217 ist es bekannt, anstelle einer basischen Lösung eine zucker-aminosäuren- und/oder enzymhaltige Lösung auf die Kakaomasse zu sprühen, um das Aroma zu verbessern. Eine Kurzzeiterhitzung unter Luftausschluß ist bei einer Sterilisieranlage nach DE-OS 37 03 237 bekannt. Röstfehler können in Masseröstanlagen nach der DE-OS 35 35 334 ausgeglichen werden.

Aus der europäischen Patentanmeldung 84116376.9 (Veröffentlichungsnummer 0178349) ist ein universell einsetzbarer Autoklav bekannt, der aus einem stehenden zylindrischen Behälter mit Heizschlangen und einem Rührwerk in seinem Inneren besteht.

Das Rührwerk ist einer vertikalen Förderschnecke ähnlich. Die Kakaomasse tritt unten in die Förderschnecke ein. Der Schneckenausgang ist oberhalb des Kakaomassespiegels ringförmig radial angeordnet, so daß die Kakaomasse in einem dicken Strom nach unten auf den Kakaomassespiegel fällt. Der Zweck dieser Konstruktion ist es, die dem Gasstrom ausgesetzte Oberfläche der Kakaomasse zu vergrößern und den chemisch/physikalischen Vorgang zu erleichtern. Die Anlage wird zwar am Markt angeboten, wird jedoch den beschriebenen verfahrenstechnischen Anforderungen kaum gerecht:

- Die Geschwindigkeit der Kakaomasse um die Heizrohre, insbesondere in Anbetracht der hohen Viskosität der Kakaomasse, ist gering, so daß sich ein schlechter Wärmeübergang ergibt. Um trotzdem eine ausreichende Aufheizzeit in der Kakaomasse zu erreichen, muß die Heizmitteltemperatur hoch gewählt werden. Die hohe Heizmitteltemperatur schädigt die Kakaomasse partiell;

- in der Nähe der Heizrohre treten Anbackungen an den Heizrohren aus der Kakaomasse auf. Diese können nicht entfernt werden, da die Heizschlangen in dem engen Autoklaven eng einanderliegen und verunreinigen das Produkt;

- das förderschneckenartige Rührwerk löst das Produkt in die Form einer frei-fallenden schirmartigen Schicht auf. Diese Schicht ist, erzwungen durch die Konstruktion, zu dick, so daß der gewünschte physikalische Effekt einer Wasserdampfdestillation aus der Oberfläche kaum erreicht wird.

Der Erfindung liegt nun die Aufgabe zugrunde, ein Verfahren und eine Vorrichtung der eingangs genannten Art zu schaffen, wobei die Vorrichtung so aufgebaut ist, daß sie qualitativ hochwertige Produkte liefert, vergleichbar zu den Produkten aus den Arbeitsgängen optimal angepaßter Einzelanlagen, daß sie leicht zu reinigen ist, und daß sie wenig Betriebsmittel verbraucht.

Diese Aufgabe wird grundsätzlich durch das Kennzeichen des Anspruches 1 gelöst, wobei in vorteilhafter Weise so gearbeitet werden kann, wie in den Ansprüchen 2 und 3 angegeben. Die Vorrichtung zur Durchführung des erfindungsgemäßen Verfahrens ist so aufgebaut, wie in Anspruch 4 angegeben, wobei die Ansprüche 5 bis 7 besonders vorteilhafte Ausgestaltungen unter Schutz stellen.

Erfindungsgemäß wird die Behandlung der Kakaomasse nicht in einem kompliziert aufgebauten kombinierten Behälter durchgeführt, der sämtliche Arbeitsgänge erfüllen soll und daher die geschilderten Nachteile aufweist, sondern die Erwärmung erfolgt in einem getrennt ausgebildeten Wärmetauscher. Der Mischbehälter kann verhältnismäßig einfach so konstruiert sein, daß er die ihm zugedachten Aufgaben optimal erfüllt. Die Erwärmung der Kakaomasse findet überwiegend in dem Wärmetauscher statt, durch den kontinuierlich ein Teilstrom aus dem Mischbehälter hindurchgepumpt wird. Der Wärmetauscher kann optimal für einen guten Wärmeübergang ausgelegt sein, so daß nur eine sehr kurze Zeit erforderlich ist, in der die Kakaomasse der erhöhten Temperatur ausgesetzt wird. Dieses ist im Hinblick auf ein hochqualitatives Endergebnis von Vorteil.

Wenn die Vorrichtung, so wie in Anspruch 5 angegeben, einen Schirm mit gewölbter Oberfläche aufweist, so wird sichergestellt, daß die Kakaomasse aus dem entstehenden Ringspalt in einer vorherbestimmten gleichmäßig dünnen Schichtdicke austritt.

Wenn der Wärmetauscher, so wie in Anspruch 7 angegeben, ausgebildet ist, ist dieser Wärmetauscher leicht zu reinigen.

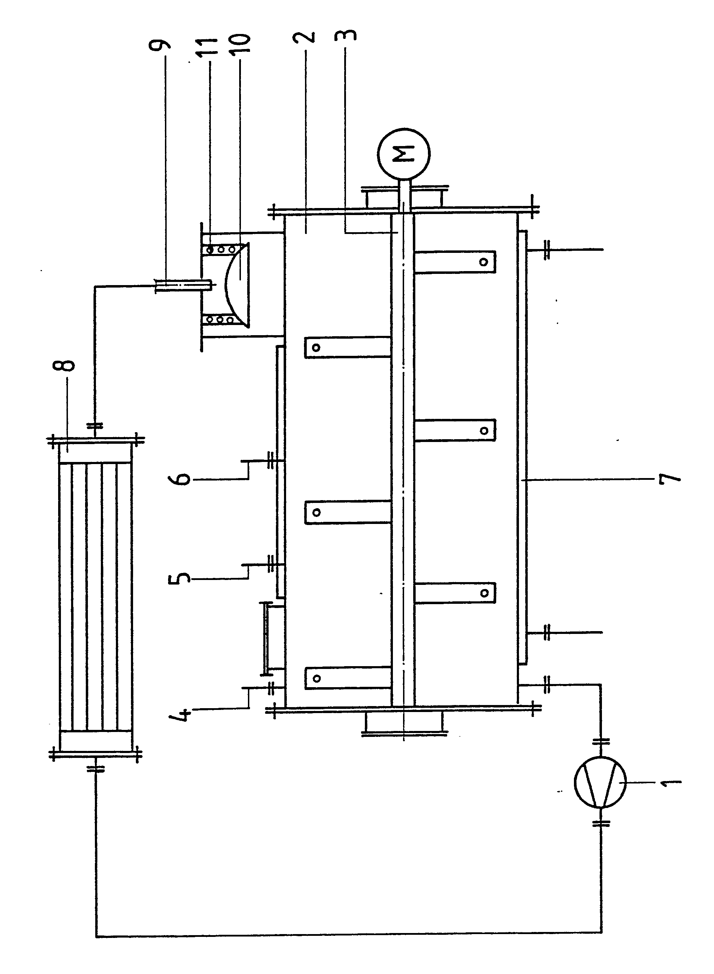

Im folgenden wird die Erfindung unter Hinweis auf die Zeichnung anhand eines Ausführungsbeispieles näher erläutert.

In der einzigen Figur ist ein Mischbehälter 2 dargestellt, der als liegender Zylinder ausgebildet ist. In dem Mischbehälter ist ein Rührwerk 3 angeordnet, wobei die Rührerwelle, die durch einen Motor M angetrieben wird, ebenfalls horizontal liegt.

In den Mischbehälter führt ein Stutzen 4 zum Zugeben von Aromatisierungsmittel bzw. dem Alkali und Wasser. Zum Raffinieren, d.h. Entsäuern und Desodorieren, wird Wasser ebenfalls durch den Stutzen 4 zugegeben. Durch den Stutzen 5 kann Inertgas zugegeben werden, um eine Oxidation in der Kakaomasse zu vermeiden. Durch das höhere Molekulargewicht des Inertgases wird die Luft aus dem Behälter verdrängt. Sie entweicht durch einen Stutzen 6. Die Mantelheizung 7 am Außenumfang des Mischbehälters 2 hält die Kakaomasse auf der gewünschten Temperatur, d.h. es werden lediglich Wärmeverluste durch den Mischbehälter ausgeglichen.

In einem Wärmetauscher 8 wird die Kakaomasse auf die gewünschte Temperatur erwärmt. Dazu wird stetig ein Teilstrom mittels einer Pumpe 1 aus dem Mischbehälter 2 durch den Wärmetauscher 8 hindurchgepumpt. Der Wärmetauscher ist so ausgelegt, daß eine produktionsschädigende örtliche Überhitzung in der Kakaomasse nicht auftreten kann.

Bevor die Kakaomasse, die aus dem Wärmetauscher 8 austritt, in den Mischbehälter 2 zurückfällt, gelangt sie auf einen Schirm 10 mit einer gewölbten Oberfläche. Der Schirm 10 ist unter einem Stutzen 9 angeordnet. Der Schirm 10 ist in seiner Höhe verstellbar. Zu diesem Zweck sind die Halterungen 11 des Schirms mit mehreren Löchern versehen, die übereinander angeordnet sind.

Wenn die gesamte Kakaomasse einer Charge eingefüllt ist, werden die entsprechenden Stoffe durch die Stutzen 4 und 5 zugegeben. Entsprechend entweicht die Luft aus dem Stutzen 6. Im übrigen läuft der Vorgang so ab, wie es sich aus der vorstehenden Beschreibung ergibt.

Als besonders vorteilhaft hat es sich herausgestellt, wenn die Kakaomasse im Wärmetauscher um weniger als 20°C erwärmt wird und die Verweilzeit in dem Wärmetauscher unter 30 Sek. liegt.

**Ansprüche**

1. Verfahren zum Aromatisieren, Alkalisieren, Raffinieren, Sterilisieren und Rösten von Kakaomasse, bei dem die Kakaomasse, die Aromatisierungsmittel oder Alkalisierungsmittel enthaltende wässrige Lösung und/oder Wasser in einen Mischbehälter eingefüllt werden, dadurch gekennzeichnet, daß die in den Mischbehälter eingefüllte Kakaomasse unter kontinuierlicher Kreislaufförderung in einen getrennt ausgebildeten und angeordneten Wärmetauscher gepumpt und dort überwiegend erwärmt wird, und daß die in dem Wärmetauscher erwärmte Kakaomasse zurück in den Mischbehälter gepumpt wird.

2. Verfahren nach Anspruch 1, dadurch gekennzeichnet, daß die Kakaomasse beim Wiedereintritt in den Mischbehälter in eine gleichmäßige dünne Schicht aufgeteilt wird.

3. Verfahren nach Anspruch 1 oder 2, dadurch gekennzeichnet, daß die Kakaomasse in dem Wärmetauscher um weniger als 20°C erwärmt wird und daß die Verweilzeit in dem Wärmetauscher unter 30 Sek. liegt.

4. Vorrichtung zur Durchführung des Verfahrens nach Anspruch 1 oder 3, gekennzeichnet durch einen liegenden Zylinder mit einem Rührwerk (3) als Mischbehälter (2), einen Stutzen (7) für das Auspumpen der Kakaomasse, einen Stutzen (6) für den Luftaustritt, einen Stutzen (5) für die Zugabe von Inertgas und einen getrennt ausgebildeten und angeordneten Wärmetauscher (8).

5. Vorrichtung nach Anspruch 4 zur Durchführung des Verfahrens nach Anspruch 2, dadurch gekennzeichnet, daß zum Aufteilen in die gleichmäßige dünne Schicht ein Schirm (10) mit einer gewölbten Oberfläche angeordnet ist.

6. Vorrichtung nach Anspruch 5, dadurch gekennzeichnet, daß der Schirm (10) in seiner Höhe verstellbar ist.

7. Vorrichtung nach einem oder mehreren der vorstehenden Ansprüche 4 bis 6, dadurch gekennzeichnet, daß der Wärmetauscher (8) ein Röhrenbündelwärmetauscher oder ein Doppelrohrwärmetauscher ist.